Europäisches Patentamt

European Patent Office

Office européen des brevets

(11) Publication number: **0 395 262**
**A2**

## EUROPEAN PATENT APPLICATION

(21) Application number: **90303949.3**

(22) Date of filing: **11.04.90**

(51) Int. Cl.⁵: **B60T 13/74, B60T 13/12**

(30) Priority: **22.04.89 GB 8909214**

(43) Date of publication of application:
**31.10.90 Bulletin 90/44**

(84) Designated Contracting States:
**DE FR GB IT**

(71) Applicant: **LUCAS INDUSTRIES public limited
company**
**Great King Street**
**Birmingham, B19 2XF West Midlands(GB)**

(72) Inventor: **Anderson, Robert Alan**
**38 Langcomb Road**
**Shirley, Solihull, West Midlands(GB)**

(74) Representative: **Waite, Anthony William et al**
**MARKS & CLERK Alpha Tower Suffolk Street**
**Queensway**
**Birmingham B1 1TT(GB)**

(54) Brake actuator.

(57) A brake actuator (1) has a piston (2) slidable therein and acting on a volume of hydraulic fluid contained in a chamber (5). The piston (2) is provided over part of its length with a gear profile (11) which is engaged by a drive input member (12) typically in the form of a rotary pinion. The input member is driven by an electric motor (13) to actuate the piston in translation via the gear profile (11).

EP 0 395 262 A2

FIG 1

This invention relates to a brake actuator, primarily for a vehicle, and of the general kind having a body forming a cylinder within which a piston is slidable to modify the pressure of a volume of hydraulic fluid within the cylinder.

An actuator has previously been proposed in which an electric motor drives a piston along a cylinder by means of a screw device interconnecting the motor and piston. When a conventional cylinder of standard diameter is employed, it is often not practicable to provide a screw thread on the piston or any associated component which moves along the cylinder wall during operation of the actuator, since the thread diameter is then too small to provide the required thread efficiency. Conversely, if the thread is provided externally of the cylinder on a component of sufficiently large diameter for thread efficiency, the overall length of the mechanism can become excessive.

An object of the invention is to provide an improved motor driven brake actuator which is largely or wholly free from the aforesaid disadvantages.

According to the invention, in a brake actuator of the aforesaid general kind, the piston is provided with a gear profile over at least a part of its length, and a drive input member is drivable by an electric motor and has thereon a complementary gear formation engaged with the piston gear profile, whereby the motor drives the piston along the cylinder.

Preferably, said gear profile is a rack formation extending longitudinally of the piston. The drive input member may conveniently be a rotary element, typically in the form of pinion.

In one convenient arrangement, the cylinder is provided, forwardly of the piston, with an outlet port for pressurised fluid and, rearwardly of the piston, with a fluid inlet port for connection to a master cylinder.

The invention also embraces a braking system in which brake actuators of the invention are arranged to actuate respective vehicle brakes under the control of an electronic control unit from which signals are supplied to the actuator motors in response to a variety of braking parameters.

The invention will now be described, by way of example, with reference to the accompaning drawings in which:-

Figure 1 is a longitudinal cross-section of one form of the brake actuator of the invention;

Figure 2 is a view similar to Figure 1 of an alternative form of the actuator of the invention;

Figure 3 is a view similar to Figures 1 and 2 of a further alternative form of the actuator of the invention;

Figure 4 is a view similar to Figures 1 to 3 of a further alternative form of the actuator of the invention;

Figure 5 is a longitudinal cross-section of an alternative form of actuator to that shown in Figure 4;

Figure 6 is a view similar to Figure 1 of a further alternative form of the brake actuator of the invention;

Figure 7 is a diagrammatic illustration of one form of vehicle braking system incorporating the brake actuator of Figure 1;

Figure 8 is a diagrammatic illustration of one form of vehicle braking system incorporating the actuator of Figure 2, and

Figure 9 is a diagrammatic illustration of a further form of vehicle braking system incorporating the actuator of Figure 1.

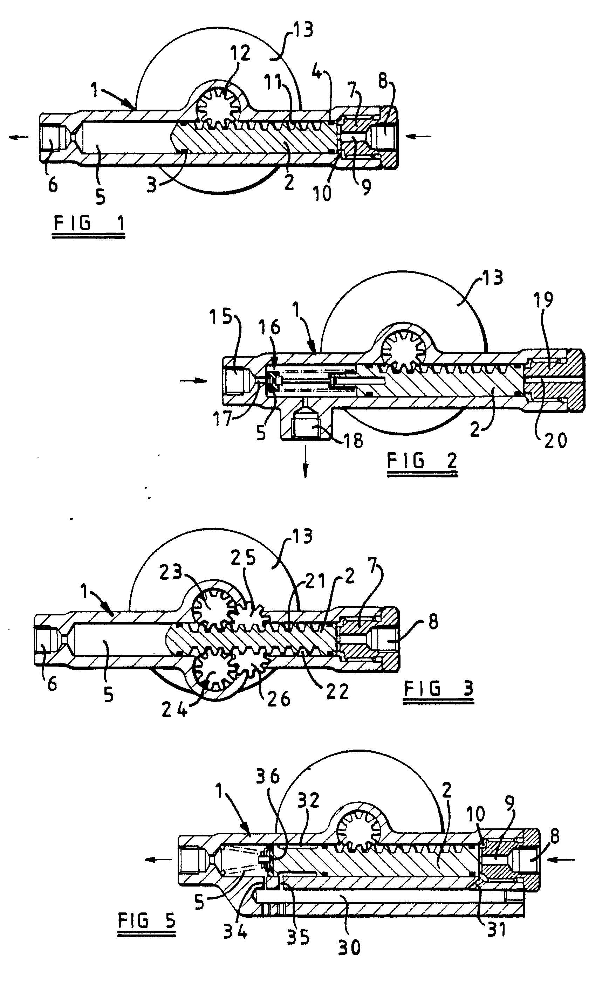

Referring to Figure 1, the brake actuator illustrated therein has a cylinder body, indicated generally at 1, containing a piston 2 slidable therein and sealed against the internal cylinder wall by seals 3, 4. The cylinder contains a space 5 forwardly of the piston and forward movement of the piston pressurises hydraulic fluid within this space for supply, via a fluid outlet 6, to a vehicle brake for actuation of the latter. Rearwardly of the piston, the body 1 is provided with an end plug 7 which is screwed into the body and provides a fluid inlet port 8 for connection to a master cylinder The port 8 communicates via an axial passage 9 with a chamber 10 at the rear of the piston 2.

The outer surface of the piston is provided with a gear profile in the form of a rack 11 which meshes with an input drive pinion 12 driven in rotation by an electric motor 13. It will be seen that rotation of the pinion 12 in one direction will cause the piston 2 to move forwardly in order to pressurise braking fluid in the chamber 5.

The actuator described above is intended to be actuated mainly from a hydraulic master cylinder (not shown) by introduction of pressure fluid via the inlet 8 into the chamber 10 in order to cause forward movement of the piston and consequent pressurisation of fluid in the forward chamber 5. The piston may additionally be operated by the action of the motor 13 via the gear 12 and rack 11 and this can be used to supplement or reduce the effect of the master cylinder-derived pressure according to the particular requirements envisaged by using appropriate sensed signals to control operation of the motor. For example, additional actuating force may be applied by the motor in order to provide servo-assisted actuation of the vehicle brake. Alternatively, the actuator may be used as an anti skid modulator to reduce the braking pressure typically in response to the sensing of a wheel skid condition at a braked wheel.

The actuator illustrated in Figure 21 is generally similar to that of Figure 1 but is designed to be operated entirely electrically and does not require input pressure from a master cylinder. In this embodiment, the forward end of the cylinder is provided with an inlet port 15 which would be connected, in use, to a suitable fluid reservoir. A conventional centre valve 16 controls the flow of fluid from the reservoir via a recuperation port 17 into the forward chamber 5 of the cylinder, the valve being in its illustrated open position when the piston is retracted and caused to close off the port 17 upon forward movement of the piston, in conventional manner, permitting fluid pressure to be established in the chamber 5 for actuation of a vehicle brake via a fluid outlet 18. The rear end of the cylinder is closed off by an end closure member 19, the latter being provided with a vent passage 20 to atmosphere to maintain a constant pressure at the rear of the piston 2 during forward and rearward movement thereof. The brake is operated by energising the motor 13 in a direction such as to move the piston 2 forwardly to pressurise the chamber 5, as aforesaid. Reversal of the motor causes the piston to return to its illustrated retracted position and braking pressure is thereby relieved.

It can be desirable to apply balanced actuating forces to the piston and Figure 3 illustrates one arrangement for achieving this. The actuator again has a cylinder body 1 in which slides a piston 2 and pressurised fluid from a chamber 5 is applied to a brake actuator via an outlet 6. The rearward end of the cylinder contains a closure member 7 having an inlet port 8 for connection to a master cylinder, as in the case of Figure 1. It will be understood, however, that this may be replaced by a plug similar to that illustrated at 19 in Figure 2, in which case, the chamber 5 would communicate with a reservoir, either as illustrated in Figure 2 or in any other suitable conventional manner.

In this embodiment, the piston 2 is provided at diametrically opposed locations on its outer surface with respective rack formations 21, 22, each meshing with respective pinions 23, 24. Idler gears 25, 26 mesh respectively with pinions 23, 24 and also mesh together. One of the pinions 23, 24 is driven by the motor 13 and driving force is applied by the pinion 23 directly to the rack formation 21 and indirectly via the idler gears 25, 26 and the opposed pinion 24 to the rack 22 so that balanced actuating forces are applied to the two opposite sides of the piston. This actuator otherwise operates in the manner described in relation to Figure 1.

Figure 4 illustrates an alternative form of the actuator of the invention which is similar to that of Figure 1 but which incorporates means to allow the piston to replenish the increased fluid volume arising in the brake actuator as a result of lining wear. For this purpose, fluid replenishment from the master cylinder is required. In order to achieve this, a pair of passages 7A are provided between the inlet port 8 and the space 10 at the rear of the piston. Additionally, the piston 2 is provided with a longitudinal passage 2A controlled by a ball valve 2B which is normally spring urged into engagement with an internal valve seat 2C at the rear end of the piston. When the piston is returned to its fully retracted position, as illustrated, the ball valve 2B is displaced from the seat 2C by contact with a projection 2D on the forward end of the insert 7, allowing fluid to flow from the inlet 8 via the passages 7A and space 10 along the passage 2A into the pressure chamber 5. The motor 13 can be controlled to ensure that the piston is returned, at intervals, to its fully retracted position to permit fluid replenishment of the cylinder to occur in the aforesaid manner.

An alternative arrangement for achieving replenishment of the pressure chamber is illustrated in Figure 5. The main components are the same as those in Figure 4, but an additional longitudinal passage 30 is provided in the cylinder body 1 externally of and parallel to the main cylinder. This communicates, near one of its ends, with the rear cylinder space 10 by way of a passage 31 and, near its other end, respectively with the pressure chamber 5 and an annular space 32 around a forward end portion of the piston via passages 34, 35. In the illustrated position, the pressure chamber 5 communicates with the master cylinder, for recuperation purposes, via the passages 34, 30, 31, space 10, passage 9 and inlet port 8. When the piston 2 is moved forward in an actuation mode, a seal 36 on the forward end thereof closes off the port 34 to permit pressurisation of the chamber 5 for brake actuation. When the piston 2 returns to its illustrated retracted position, the port 34 is opened once again and any necessary fluid recuperation from the master cylinder 8 into the chamber 5 can take place. The function of the space 32 and passage 5 is to permit equalisation of fluid pressure behind the piston seal 36.

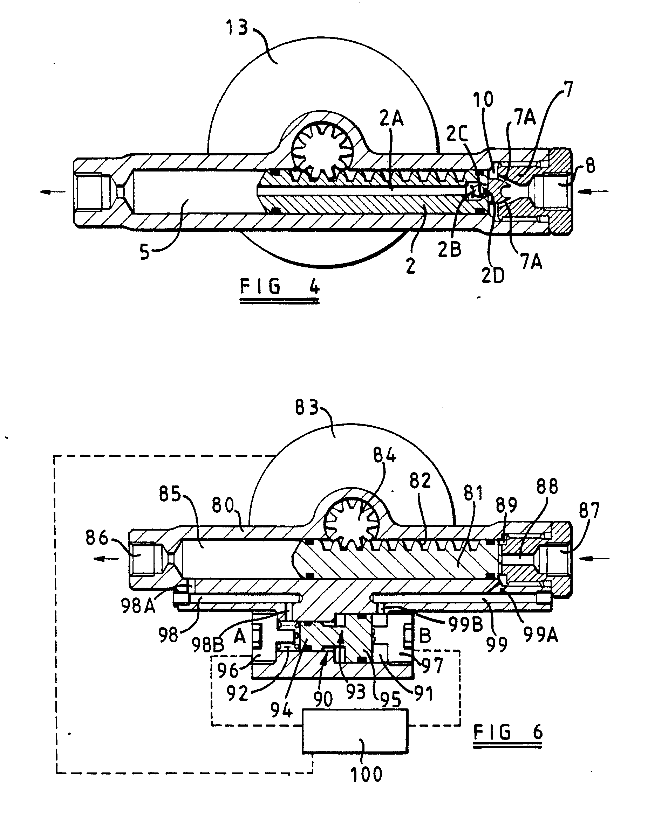

The alternative form of actuator illustrated in Figure 6 incorporates means which enable a power assistance mode to be obtained in a braking system. In this arrangement, the actuator has a cylinder body 80 containing a reciprocable piston 81 which is driven via a rack formation 82 thereon by an electric motor 83 via a drive pinion 84. Hydraulic fluid is pressurised in a chamber 85 forwardly of the piston and supplied to a vehicle brake via a pressure outlet 86. Pressure fluid from a master cylinder (not shown) is supplied to a pressure inlet 87, whence it flows via passage 88 to a pressure space 89 at the rear side of the piston 81.

The cylinder body 81 incorporates a stepped bore 90 extending parallel with the piston 81 and having a large diameter portion 91 and a smaller diameter portion 92. A balance piston 93 is housed within the bore 90 and has a smaller diameter portion 94 slidable in the bore portion 92 and a larger diameter portion 95 slidable in the bore portion 91. The ends of the bore 90 are closed respectively by end plugs 96, 97 which incorporate respective switches actuated when engaged by the piston 93. The smaller diameter bore portion 92 communicates with the cylinder chamber 85 by way of an axial passage 98 and associated radial passages 98A, 98B. The larger diameter bore portion 91 communicates with the pressure space 89 via an axial passage 99 and associated radial passages 99A, 99B. When pressure is applied to the inlet port 87 from the master cylinder, this pressure is experienced by the piston 81 and the larger diameter portion 95 of the balance piston 93. Movement of the piston 81 along the cylinder bore under the action of the master cylinder pressure pressurises the fluid in the chamber 85 and thereby the brake actuator via the outlet connection 86. This braking pressure is applied via the passage 98 to the smaller diameter balance piston portion 94. Because of the differential balance piston areas, the predominant force on this piston at this stage will be to the left as seen in the drawing and the balance piston moves in this direction to actuate the switch in the end plug 96. The resulting electrical signal is fed to an electrical controller 100, which is programmed to .cause the controller to drive the motor 83 in a direction such as to drive the piston 81 forwardly and provide additional pressure to assist the brake application. When the pressure forces on the piston parts 94, 95 are balanced, the balance piston moves away from the end plug 96 and the switch therein becomes inoperative, so that the motor applies no further additional torque. When the master cylinder pressure is removed, the balance piston moves to the right to actuate the switch in end plug 97, causing the motor 83 to operate in the reverse direction and reduce the braking pressure.

It will be seen that in the master cylinder-actuated embodiments, the master cylinder can continue to actuate the system in the event that drive from the electric motor ceases, thereby providing a useful degree of security. Although the described embodiments are illustrated with straight rack teeth, helical teeth are not excluded and may be advantageous in some arrangements since more of the teeth flanks are employed, leading to improved shear load capacity and piston location.

The rack formation in the illustrated embodiments of the actuator is integral with the piston, but it can sometimes be advantageous to form the rack separately and secure it to the piston. With such an arrangement, the piston may be of plastics material or metal alloy for example and the rack formation of relatively hard metal, such as stainless steel. The rack formation, whether initially separate or integral, could be formed internally of the piston, for example within a groove in the latter, rather than on the outer surface of the piston as illustrated.

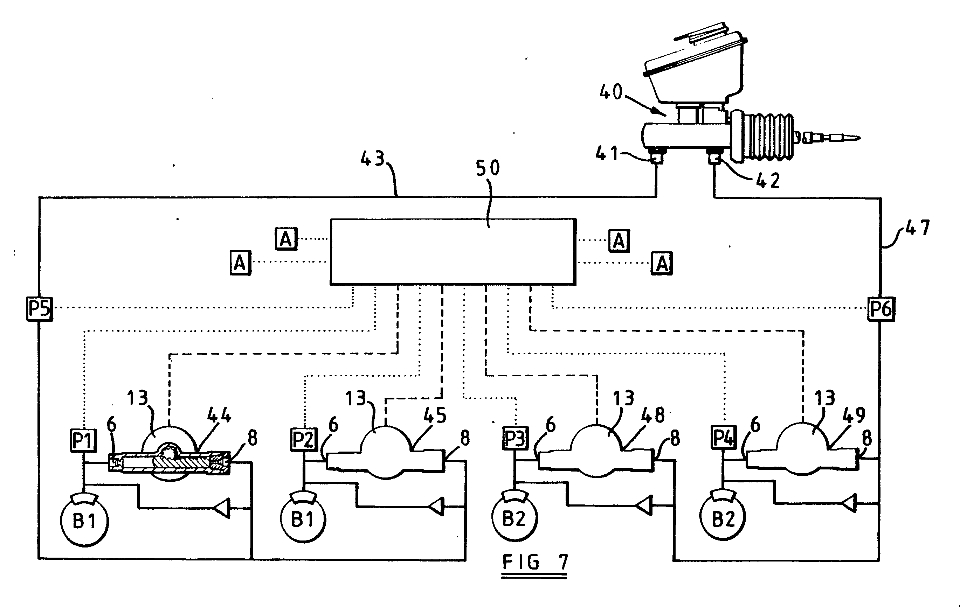

One form of braking system incorporating the actuator of Figure 1 is illustrated in Figure 7. A master cylinder assembly 40 has a pair of fluid pressure outlets 41, 42, the outlet 41 being connected via a pressure line 43 to the pressure inlets 8 of a pair of actuators 44, 45, the outlets 6 of which are connected respectively to vehicle brakes B1. The pressure outlet 42 is connected via a pressure line 47 to the inlet ports 8 of a further pair of actuators 48, 49, the pressure outlets 6 of which are connected respectively to vehicle brakes B2. The actuator motors 13 are connected to an electronic control unit 50 which drives the motors according to a predetermined programme in dependence upon a number of input parameters. One set of parameters is provided by pressure transducers P1 to P4 which respectively sense the pressures at the individual brakes B1, B2. Further parameters are provided by pressure transducers P5 and P6 disposed respectively in the pressure supply lines 43, 47 which measure the pressure output of the master cylinder in these lines as a result of driver operation of the master cylinder. The control unit 50 may also be supplied with parameters indicating instantaneous wheel speed sensed at the respective braked wheels to permit anti skid and traction control modes to be operated, in the manner to be described. Appropriate sensors are represented at A and would in practise be disposed adjacent the respective wheels B1, B2.

In normal operation, the master cylinder, when pressurised by action of a driver, supplies fluid under pressure to the fluid inputs 8 of the motor driven actuators 44 to 49. This input pressure is measured by the pressure transducers P5 and P6 as are the output pressures of the actuators by the transducers P1 to P4. Pressure-representative signals from the transducers are sent to the control unit 50 and the master cylinder pressure is compared with the achieved brake pressure. A programme applied to the control unit can set the desired brake pressure for normal use and the control unit can compare the desired and achieved brake pressures and control the motors individually so as to increase or decrease the pressure applied and thereby ensure that the desired actuating pressure is achieved at each wheel. It is possible by these means to limit the motor torque in response to excessive pressure sensed by the transducers P5 and P6 so as to prevent brake overload which might otherwise occur should a driver apply excessive pedal pressure.

If one or more of the wheel speed sensors A detects an incipient wheel spin condition during acceleration, one or more of the actuators 44 to 49 may be energised by the control unit in order to apply the brakes on the appropriate wheels in order to correct this condition.

In the event that an incipient skid condition is sensed by a wheel speed sensor A, the actuators at the appropriate wheels may be switched off individually, either instantaneously or in a controlled manner and, if necessary, the appropriate motors reversed to deboost the brake causing the skid condition. In the anti skid mode, the transducers P1 to P4 can be used to sense the braking pressure and the control unit may responsively control the brake re-apply rate relative to the previous skid pressure in order to avoid a pressure over-shoot and the possibility of a resultant skid condition.

It will be understood that the master cylinder may be replaced by mechanical actuating means for the pistons of the actuators, but any such device would have to be such as to be overcome by reverse operation of the motors 13 when a reduction in braking pressure is required.

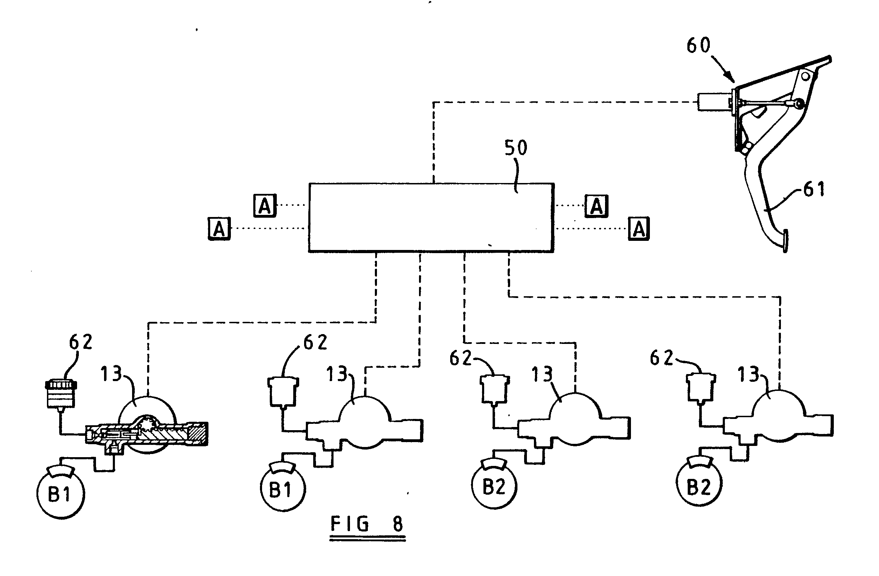

An alternative braking system illustrated in Figure 8 employs a plurality of actuators of the type illustrated in Figure 2 and is intended for electrical operation without intervention from a master cylinder. The master cylinder is replaced by a device 60 which, when operated by a driver's brake pedal 61, produces a digital or analogue signal proportional to a predetermined demand pressure or to a desired deceleration. The resulting signals are received by the control unit 50 which is operated in response thereto to switch on the actuator motors 13 in order to actuate the brakes B1, B2. Individual reservoirs 62 are provided to permit fluid recuperation to occur when the actuators are in their rest positions. The pressure output from the actuators is controlled so as to be proportional to the demand at the drivers pedal and a variety of standard control methods, such as closed loop control using deceleration or pressure feedback, can be used. The power assistance, anti skid and traction control operation can be embodied in the system of Figure 7 in a manner similar to that described for Figure 6 using the sensors A, where appropriate.

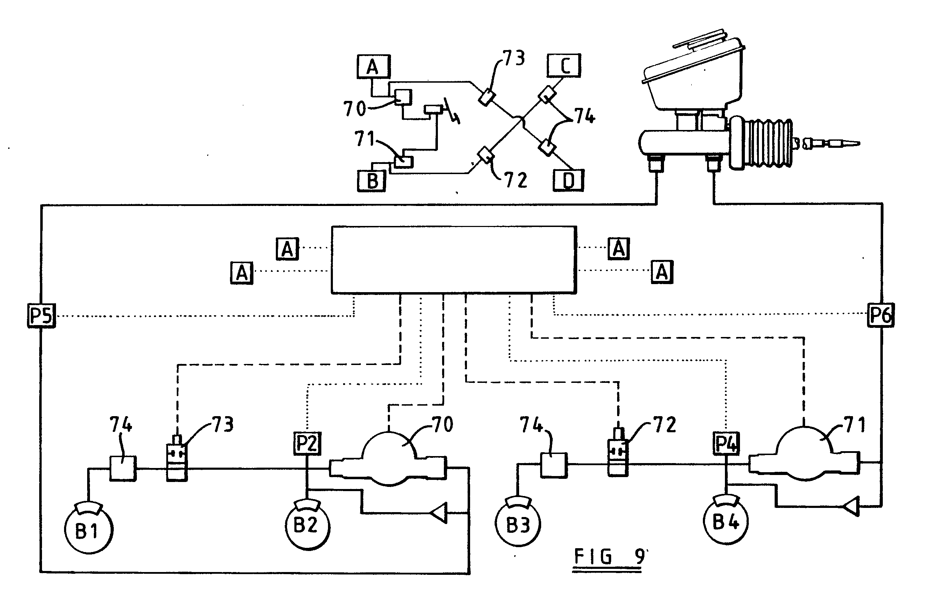

Figure 9 illustrates a further alternative system in which the brake actuators B1, B4 are arranged in a conventional X-split configuration, the actuators being controlled in respective pairs B1, B2 and B3, B4 by actuators 70, 71, the brake actuators B2 and B4 being associated with respective ones of a pair of driven wheels. Electrically operated solenoid cut off valves 72, 73 are provided to isolate the brakes B1, B3 associated with a pair of non-driven wheels from the actuator pressure during traction control operation. It may also be necessary to employ pressure apportioning valves in the pressure line to the brakes at the non-driven wheels and these are illustrated schematically at 74. All of the various functions described in relation to the systems of figures 6 and 7 can be achieved in this split system also.

In the system embodiments using pressure transducers or other sensors in the pressure output lines, it is possible to provide different levels of servo-assistance respectively on the front and rear brakes on the pressure-conscious basis. This can be operated from the inception of a braking operation, or from the occurrence of a predetermined braking pressure using appropriate programming of the electronic control unit. Such systems can also be made deceleration-conscious so that braking forces can be modified in response to deceleration. This can be used to reduce the braking force at the rear wheels in order to compensate for forward load movement during braking. This could be accompanied by the provision of extra servo-assistance at the front wheels, if required. A further possibility is to vary the motor zero position so as to set the retracted position of the piston further forward in order to compensate for friction lining wear.

## Claims

1. A brake actuator comprising a body (1) forming a cylinder within which a piston (2) is slidable, the piston being provided with a gear profile (11) over at least a part of its length, and a drive input member (12) drivable by an electric motor (13) and having thereon a complementary gear formation engaged with the piston gear profile, whereby the motor (13) drives the piston (2) along the cylinder.

2. A brake actuator according to Claim 1, wherein said gear profile is a rack formation (11) extending longitudinally of the piston (2).

3. A brake actuator according to Claim 1 or Claim 2, wherein the drive input member is a rotary pinion element (12).

4. A brake actuator according to any one of the preceding claims, wherein the cylinder is provided, forwardly of the piston (2), with an outlet port (6) for pressurised fluid and, rearwardly of the piston, with a fluid inlet port (8) for connection to a master cylinder.

5. A brake actuator according to any one of Claims 1 to 3 wherein the cylinder is provided, forwardly of the piston, with an outlet port (18) for pressurised fluid and a fluid inlet (15) controlled by valve means (16), a space at the rear of the piston being vented to atmosphere.

6. A brake actuator according to any one of the preceding claims wherein rack formations (21, 22) are provided at angularly spaced locations on the piston (2) and engaged by respective pinion elements (23, 24), one of which is driven by the motor (13) and the other via idler gear means (25, 26).

7. A brake actuator according to Claim 4, wherein the inlet port (8) communicates with a pressure chamber (5) forward of the piston via a longitudinal passage (2A) of the piston (2), and valve means (2B) is arranged so that it normally closes said passage but opens to permit fluid flow from the inlet through the passage when the piston is in its retracted position.

8. A brake actuator according to Claim 4, wherein a pressure chamber (5) forwardly of the piston is provided with a recuperation port (34) which communicates with the fluid inlet port (8) by way of a passage (30) formed longitudinally within the body (1).

9. A brake actuator according to any one of Claims 4, 6 or 7 wherein the body additionally incorporates a stepped bore (90) containing a balance piston (93) having portions (94, 95) of different diameters corresponding respectively to the different diameter bore portions which communicate respectively with said fluid inlet (87) and outlet (86), said piston portions being associated respectively with switches (96, 97) arranged to be actuated by the piston (93) at opposite extremes of its travel, the piston being urged towards one of said extremes, whereby the balance piston senses the inlet and outlet pressures and, by actuating said switches, provides signals to actuate the motor (83) for varying the outlet pressure.

10. A braking system incorporating at least one brake actuator (44, 45, 48. 49) according to any one of the preceding claims, comprising a primary fluid pressure source (40) connected to a fluid inlet (8) of the actuator, a brake (B1, B2) connected to a fluid outlet (6) of the actuator, means for producing electrical signals representing the inlet and outlet pressures of the actuator, an electronic controller (50) arranged to receive said signals and produce responsive output signals which are applied to the actuator motor (13) causing it to vary the actuator output pressure according to predetermined parameters.

11. A braking system according to Claim 10 wherein a plurality of brakes (B1, B2) are provided and controlled in respective pairs by a pair of brake actuators (70, 71), one brake from each pair being associated respectively with a pair of driven wheels and the other brake from each pair respectively with a pair of non-driven wheels, means (A) being provided to sense an incipient spin condition at said driven wheel and to provide a representative signal to the controller (50) which drives the corresponding actuator motor (70, 71) to cause application of the brakes on the driven wheels to correct said condition, an electrical cut off valve (72, 73) being associated with the non-driven wheels and operable by the controller to isolate the brakes of these wheels during continuance of said condition.

12. A braking system incorporating at least one brake actuator according to any one of Claims 1 to 9, comprising driver-operated means (60) providing an output signal representative of braking demand, a brake (B1, B2) connected to a fluid outlet of the actuator, an electronic controller (50) arranged to receive said signals and produce responsive output signals which are applied to the actuator motor (13), causing it to supply corresponding actuation pressure to the brake.

13. A braking system according to any one of Claims 10 to 12, wherein means (A) are provided to sense an incipient skid condition at each braked wheel (B1, B2) and supply a representative signal to the controller (50) which drives the actuator motor (13) to relieve the braking pressure in order to correct said condition.

FIG 1

FIG 2

FIG 3

FIG 5

FIG 4

FIG 6

FIG 7

EP 0 395 262 A2

FIG 8

EP 0 395 262 A2

FIG 9